# EUROPÄISCHE PATENTANMELDUNG

(11) **EP 4 789 812 A1**
(43) Veröffentlichungstag der Anmeldung: **12.08.2026**
(21) Anmeldenummer: 25156127.0
(22) Anmeldetag: 06.02.2025
(51) Int. Cl.: B23Q 3/157, B23Q 3/155

(54) **WERKZEUGMASCHINE**

(71) Anmelder: Schwäbische Werkzeugmaschinen GmbH, 78713 Schramberg-Waldmössingen (DE)
(72) Erfinder: Fontaine, Thomas, 78078 Niedereschach (DE); Budai, János, 6035 Ballószög (HU); Marmol, Damian, 33-395 Chelmiec (PL); Bittner, Pascal, 78667 Villingendorf (DE)
(74) Vertreter: Schorr, Peter Karl

(57) **Zusammenfassung**

Die Erfindung betrifft eine Werkzeugmaschine (2) mit mindestens einer Arbeitsspindel (4), die entlang einer Spindelachse (6) erstreckt ist und an der zum Bearbeiten von Werkstücken entlang der Spindelachse (6) ein erstes Werkzeug (8) unmittelbar an der Arbeitsspindel (4) und ein zweites Werkzeug (10) unmittelbar am ersten Werkzeug (8) festlegbar ist, und mit mindestens einer Werkzeugwechseleinrichtung (12), die mindestens ein erstes Haltemittel (14), an dem mindestens ein erstes Werkzeug (8) festlegbar ist und das an einer Wechselposition der Arbeitsspindel (4) anordenbar oder angeordnet ist, an die die Arbeitsspindel (4) zum automatischen Aufnehmen oder Abgeben eines ersten Werkzeugs (8) vom ersten Haltemittel (14), bzw. an das erste Haltemittel (14) verfahrbar ist, und die mindestens ein zweites Haltemittel (18) umfasst, an dem mindestens ein zweites Werkzeug (10) festlegbar ist und das an der Wechselposition der Arbeitsspindel (4) oder einer weiteren Wechselposition der Arbeitsspindel (4) anordenbar oder angeordnet ist, an die die Arbeitsspindel (4) mit an dieser festgelegtem ersten Werkzeug (8) zum automatischen Aufnehmen oder Abgeben eines zweiten Werkzeugs (10) vom zweiten Haltemittel, bzw. an das zweite Haltemittel (18) verfahrbar ist.

## Beschreibung

Die Erfindung betrifft ein eine Werkzeugmaschine.

Aus dem Stand der Technik sind Werkzeugmaschinen bekannt, bei denen an einer Arbeitsspindel ein erstes Werkzeug und ein zweites Werkzeug anordenbar ist. Bei den bekannten Werkzeugmaschinen wird die Arbeitsspindel an eine Wechselposition verfahren und nimmt dort automatisch ein erstes Werkzeug auf, das beispielsweise durch ein Werkzeugmagazin bereitgestellt wird. Mit diesem ersten Werkzeug ist dann durch die Arbeitsspindel ein Werkstück bearbeitbar.

Aus dem Stand der Technik ist es ferner bekannt, an einer Arbeitsspindel, an der bereits ein erstes Werkzeug festgelegt ist, manuell ein zweites Werkzeug anzuordnen. Dieses wird auf einer der Arbeitsspindel abgewandten Seite des ersten Werkzeugs beispielsweise mittels Verschraubens, festgelegt.

Ein manuelles Anordnen eines zweiten Werkzeugs an einem ersten Werkzeug oder ein wieder manuelles Entfernen eines zweiten Werkzeugs vom ersten Werkzeug, hat sich als aufwändig und zeitintensiv herausgestellt.

Eine Aufgabe eines Ausführungsbeispiels der Erfindung ist, eine Werkzeugmaschine vorzuschlagen, bei der ein Aufnehmen und wieder Abgeben eines zweiten Werkzeugs, erleichtert ist.

Diese Aufgabe wird gelöst durch eine Werkzeugmaschine mit mindestens einer Arbeitsspindel, die entlang einer Spindelachse erstreckt ist und an der zum Bearbeiten von Werkstücken entlang der Spindelachse ein erstes Werkzeug unmittelbar an der Arbeitsspindel und ein zweites Werkzeug unmittelbar am ersten Werkzeug festlegbar ist, und mit mindestens einer Werkzeugwechseleinrichtung, die mindestens ein erstes Haltemittel, an dem mindestens ein erstes Werkzeug festlegbar ist und das an einer Wechselposition der Arbeitsspindel anordenbar oder angeordnet ist, an die die Arbeitsspindel zum automatischen Aufnehmen oder Abgeben eines ersten Werkzeugs vom ersten Haltemittel bzw. an das erste Haltemittel verfahrbar ist, und die mindestens ein zweites Haltemittel umfasst, an dem mindestens ein zweites Werkzeug festlegbar ist und das an der Wechselposition der Arbeitsspindel oder einer weiteren Wechselposition der Arbeitsspindel anordenbar oder angeordnet ist, an die die Arbeitsspindel mit an dieser festgelegtem ersten Werkzeug zum automatischen Aufnehmen oder Abgeben eines zweiten Werkzeugs vom zweiten Haltemittel bzw. an das zweite Haltemittel verfahrbar ist.

Dadurch, dass die Arbeitsspindel zum Aufnehmen eines ersten Werkzeugs vom ersten Haltemittel oder zum Abgeben eines an der Arbeitsspindel angeordneten ersten Werkzeugs an das erste Haltemittel, an die Wechselposition und zum Aufnehmen eines zweiten Werkzeugs oder Abgeben eines zweiten Werkzeugs an die Wechselposition oder eine weitere Wechselposition verfahrbar ist und das Aufnehmen oder Abgeben automatisch durchgeführt wird, ist das Werkzeugwechseln weiter automatisiert. Hierdurch können Wechselzeiten verkürzt werden und ein Werkzeugwechsel vereinfacht werden. Insbesondere kann durch das automatische Wechseln des ersten Werkzeugs und des zweiten Werkzeugs Personal eingespart werden.

Dadurch, dass an der Arbeitsspindel ein erstes Werkzeug und an dem ersten Werkzeug ein zweites Werkzeug angeordnet werden kann, sind die Möglichkeiten einer Bearbeitbarkeit eines durch die Werkzeugmaschine zu bearbeiteten Werkstücks erweitert.

Die Arbeitsspindel kann derart ausgebildet sein, dass sie beim Bearbeiten von Werkstücken durch eine translative Bewegung parallel oder quer zur Spindelachse bewegt wird. Darüber hinaus sind auch Ausführungsformen der Werkzeugmaschine denkbar, bei denen die Arbeitsspindel zum Bearbeiten eines Werkstücks um die Spindelachse rotiert.

Zum Wechseln oder Anordnen eines ersten Werkzeugs und/oder eines zweiten Werkzeugs, erweist es sich als vorteilhaft, wenn das erste Haltemittel in der Wechselposition der Arbeitsspindel in einer ersten Übergabeposition angeordnet ist, in der ein durch die Arbeitsspindel aufzunehmendes erstes Werkzeug, insbesondere mit einer quer oder schräg zur Spindelachse verlaufenden ersten Anlagefläche; berührend an der Arbeitsspindel anliegt und/oder wenn das zweite Haltemittel in der Wechselposition der Arbeitsspindel oder der weiteren Wechselposition in einer zweiten Übergabeposition angeordnet ist, in der ein durch die Arbeitsspindel aufzunehmendes zweites Werkzeug, insbesondere mit einer quer oder schräg zur Spindelachse verlaufenden zweiten Anlagefläche; berührend auf einer der Arbeitsspindel abgewandten Seite des ersten Werkzeugs an dem ersten Werkzeug anliegt.

Zum automatischen Anordnen des ersten Werkzeugs an der Arbeitsspindel und des zweiten Werkzeugs am ersten Werkzeug, umfasst eine Ausführungsform der Werkzeugmaschine mindestens eine erste Festlegeeinheit, die eine erste Aufnahme in der Arbeitsspindel oder im ersten Werkzeug, die mindestens ein erstes Vorsprungelement, das am ersten Werkzeug bzw. an der Arbeitsspindel festlegbar oder festgelegt ist und das in die erste Aufnahme parallel zur Spindelachse einführbar ist, und die mindestens ein automatisches erstes Fügemittel umfasst, durch das das erste Vorsprungelement zumindest in der in der ersten Aufnahme eingeführten Anordnung in eine Hintergriffstellung überführbar ist, in der das erste Vorsprungelement in der ersten Aufnahme gegen ein Bewegen parallel zur Spindelsachse festgelegt ist, und/oder durch mindestens eine zweite Festlegeeinheit, die eine zweite Aufnahme im ersten Werkzeug oder im zweiten Werkzeug, die mindestens ein zweites Vorsprungelement, das am zweiten Werkzeug bzw. am ersten Werkzeug festlegbar oder festgelegt ist und das in die zweite Aufnahme parallel zur Spindelachse einführbar ist, und die mindestens ein automatisches zweites Fügemittel umfasst, durch das das zweite Vorsprungelement zumindest in der in der zweiten Aufnahme eingeführten Anordnung in eine Hintergriffstellung überführbar ist, in der das zweite Vorsprungelement in der zweiten Aufnahme gegen ein Bewegen parallel zur Spindelsachse festgelegt ist.

Das Wort "beziehungsweise" wird in seinem Wortursprung verwendet. Hierbei hat es die Bedeutung von "und im anderen Fall" und nicht von "oder".

Grundsätzlich ist es denkbar, dass das erste Vorsprungelement, wenn es am ersten Werkzeug angeordnet ist, gemeinsam mit dem ersten Werkzeug ein gemeinsames einstückiges Bauteil bildet. Gleiches gilt, wenn das erste Vorsprungelement an der Arbeitsspindel festgelegt ist. Auch solchenfalls kann das erste Vorsprungelement und die Arbeitsspindel ein gemeinsames, einstückiges Bauteil bilden.

Darüber hinaus sind Ausführungsformen denkbar, bei denen das erste Vorsprungelement ein vom ersten Werkzeug, bzw. von der ersten Werkspindel separates oder separierbares Bauteil, beispielsweise einen Bolzen oder eine Schraube, umfasst.

In gleicher Weise kann das zweite Vorsprungelement, das am zweiten Werkzeug festgelegt ist, zusammen mit dem zweiten Werkzeug ein gemeinsames einstückiges Bauteil bilden. Wenn das zweite Vorsprungelement am ersten Werkzeug festgelegt ist, kann das zweite Vorsprungelement und das erste Werkzeug ein gemeinsames, einstückiges Bauteil bilden.

Darüber hinaus sind Ausführungsformen denkbar, bei denen das zweite Vorsprungelement ein vom zweiten Werkzeug, bzw. vom ersten Werkzeug separates oder separierbares Bauteil umfasst, beispielsweise einen Bolzen oder eine Schraube oder Dergleichen.

Ferner erweisen sich Ausführungsformen der Werkzeugmaschine als vorteilhaft, bei denen die Wechselposition der Arbeitsspindel stets die Gleiche ist oder bei denen mehrere Wechselpositionen der Arbeitsspindel in einer gemeinsamen Ebene liegen. Solchenfalls kann es sich als vorteilhaft erweisen, wenn das erste Haltemittel und das zweite Haltemittel der Werkzeugwechseleinrichtung zumindest im Bereich der ersten Übergabeposition und der zweiten Übergabeposition in einer Ebene quer zur Spindelachse parallel zueinander verlaufen und/oder bei denen die zweite Übergabeposition des zweiten Haltemittels bezüglich der ersten Übergabeposition des ersten Haltemittels in Richtung parallel zur Spindelachse zumindest um die Länge des ersten Werkzeugs in Richtung der Spindelachse von der Arbeitsspindel weg erstreckt versetzt angeordnet ist.

Hierdurch ist es ermöglicht, dass die Arbeitsspindel in der Wechselposition stets bis zum Erreichen einer gleichen Wechselebene verfahren wird, unabhängig davon, ob ein erstes Werkzeug aufgenommen wird oder ob ein zweites Werkzeug aufgenommen wird. Wenn ein zweites Werkzeug aufgenommen wird, ist solchenfalls an der Arbeitsspindel bereits ein erstes Werkzeug angeordnet.

Bei Ausführungsformen der Werkzeugmaschine ist vorgesehen, dass die die Werkzeugwechseleinrichtung eine im Wesentlichen quer zur Spindelachse verlaufende gemeinsame Tragstruktur, an der der das erste Haltemittel unmittelbar festgelegt ist, und mindestens ein Abstandsmittel umfasst, das an der Tragstruktur festgelegt ist, an dem das zweite Haltemittel angeordnet ist und durch das das mindestens eine zweite Haltemittel in Richtung parallel zur Spindelachse zumindest um die Länge des ersten Werkzeugs in Richtung der Spindelachse zum ersten Haltemittel beabstandet ist oder dass die die Werkzeugwechseleinrichtung eine im Wesentlichen quer zur Spindelachse verlaufende erste Tragstruktur, an der das erste Haltemittel unmittelbar festgelegt ist und eine im Wesentlichen quer zur Spindelachse verlaufende zweite Tragstruktur, an der das zweite Haltemittel unmittelbar festgelegt ist, wobei erste Tragstruktur und zweite Tragstruktur zumindest im Bereich der ersten Übergabeposition und der zweiten Übergabeposition um die Länge des ersten Werkzeugs in Richtung der Spindelachse zueinander beabstandet sind.

Wenn das mindestens eine erste Haltemittel und das mindestens eine zweite Haltemittel an der gemeinsamen Tragstruktur angeordnet sind, kann ein Versatz des zweiten Haltemittels bezüglich der Antriebsspindel durch das Abstandsmittel gewährleistet werden. Das Abstandsmittel kann armartig oder balkenartig ausgebildet sein und eine lastaufnehmende, bzw. tragende Stütze von der gemeinsamen Tragstruktur bis zum zweiten Haltemittel bilden.

Wenn die Werkzeugwechseleinrichtung eine erste Tragstruktur und eine zweite Tragstruktur umfasst, können solchenfalls das mindestens eine erste Haltemittel und das mindestens eine zweite Haltemittel unabhängig voneinander gehalten sein.

Das mindestens eine erste Haltemittel und das mindestens eine zweite Haltemittel können bezüglich der Werkzeugmaschine unbeweglich und ortsfest angeordnet sein. Solchenfalls werden, wenn mehr als ein erstes Haltemittel vorgesehen ist, jedes mögliche erste Haltemittel durch die Antriebsspindel angefahren. Jedem der mehreren ersten Haltemittel ist somit eine Wechselposition zugeordnet.

Dieses gilt in gleicher Weise, wenn mehrere zweite Haltemittel vorgesehen sind. Hierdurch sind, wenn die mehreren zweiten Haltemittel ortsfest und unbeweglich bezüglich der Werkzeugmaschine angeordnet sind, diese durch die Arbeitsspindel den mehreren, den jeweiligen zweiten Haltemitteln zugeordneten Wechselpositionen, anfahrbar.

Die durch die Arbeitsspindel anzufahrende Wechselposition kann eine einzige Wechselposition umfassen, wenn jede Tragstruktur der Werkzeugwechseleinrichtung mindestens ein Überführungsmittel umfasst, wobei das erste Haltemittel durch eines des mindestens einen Überführungsmittels an die mindestens eine Wechselposition der Arbeitsspindel bewegbar ist, und wobei das zweite Haltemittel durch das Überführungsmittel oder durch ein weiteres Überführungsmittel an die Wechselposition der Arbeitsspindel oder eine weitere Wechselposition der Arbeitsspindel bewegbar ist.

Solchenfalls werden die ersten Haltemittel und die zweiten Haltemittel durch das Überführungsmittel bewegt, so dass jeweils an die Wechselposition der Arbeitsspindel das erste Haltemittel oder das zweite Haltemittel bewegt wird, an dem das durch die Arbeitsspindel aufzunehmende erste Werkzeug, bzw. zweite Werkzeug aufgenommen werden soll.

Durch das Zuordnen mindestens eines Überführungsmittels können somit die Wechselpositionen der Arbeitsspindel auf maximal zwei Wechselpositionen beschränkt werden, wobei eine erste Wechselposition zur Aufnahme und Abgabe der ersten Werkzeuge, die an den ersten Haltemitteln angeordnet sind und eine zweite Wechselposition, den zweiten Werkzeugen zugeordnet sind, die an den zweiten Haltemitteln angeordnet sind, wenn die Werkzeugmaschine zwei Tragstrukturen, nämlich eine erste Tragstruktur, die die ersten Haltemittel trägt und eine zweite Tragstruktur, die die zweiten Haltemittel trägt, umfasst.

Darüber hinaus sind Ausführungsformen der Werkzeugmaschine denkbar, bei denen mindestens eines des mindestens einen ersten Haltemittels und/oder mindestens eines des mindestens einen zweiten Haltemittels entkoppelt und unabhängig voneinander durch das mindestens eine Überführungsmittel in die mindestens eine Wechselposition der Arbeitsspindel bewegbar sind und/oder bei denen mindestens eines des mindestens einen ersten Haltemittels und/oder mindestens eines des mindestens einen zweiten Haltemittels miteinander gekoppelt und abhängig voneinander durch das mindestens eine Überführungsmittel in die mindestens eine Wechselposition der Arbeitsspindel bewegbar sind.

Hierdurch ist es ermöglicht, dass entweder alle Haltemittel einzeln durch das Überführungsmittel bewegbar sind oder mehrere, insbesondere alle, Haltemittel durch ein und dasselbe Überführungsmittel oder jeweils durch eigene Überführungsmittel in die ,Wechselposition der Arbeitsspindel überführbar sind.

Es erweisen sich Ausführungsformen der Werkzeugmaschine als vorteilhaft, bei denen die erste Tragstruktur der Werkzeugwechseleinrichtung mindestens ein erstes Überführungsmittel umfasst, an dem mindestens eines des mindestens einen ersten Haltemittels ortsfest festgelegt ist und bei denen die Werkzeugwechseleinrichtung mindestens einen ersten Antrieb umfasst, durch den das erste Überführungsmittel bewegbar und das mindestens eine erste Haltemittels an die Wechselposition der Arbeitsspindel, insbesondere der ersten Übergabeposition, bewegbar ist und bei denen die zweite Tragstruktur der Werkzeugwechseleinrichtung mindestens ein zweites Überführungsmittel umfasst, an dem mindestens eines des mindestens einen zweiten Haltemittels ortsfest festgelegt ist und bei denen die Werkzeugwechseleinrichtung mindestens einen zweiten Antrieb umfasst, durch den das zweite Überführungsmittel bewegbar und das mindestens eine zweite Haltemittel an die Wechselposition der Arbeitsspindel, insbesondere der zweiten Übergabeposition, bewegbar ist.

Alternativ zu der vorgenannten Ausführungsform mit zwei Überführungsmitteln, kann die Werkzeugmaschine kompakt und bauteilreduziert ausgebildet sein, wenn die gemeinsame Tragstruktur der Werkzeugwechseleinrichtung mindestens ein gemeinsames Überführungsmittel umfasst, an dem mindestens eines des mindestens einen ersten Haltemittels ortsfest festgelegt ist und an dem mindestens eines des mindestens einen zweiten Haltemittels ortsfest festgelegt ist und wenn die Werkzeugwechseleinrichtung mindestens einen gemeinsamen Antrieb umfasst, durch den das gemeinsame Überführungsmittel bewegbar und das mindestens eine erste Haltemittels, insbesondere an die erste Übergabeposition, und das mindestens eine zweite Haltemittel, insbesondere an die zweite Übergabeposition, an die mindestens eine Wechselposition der Arbeitsspindel bewegbar sind.

Hierdurch sind an ein und demselben gemeinsamen Überführungsmittel sowohl mindestens ein erstes Haltemittel als auch mindestens ein zweites Haltemittel angeordnet. Diese können dann gemeinsam und miteinander gekoppelt oder voneinander getrennt und unabhängig voneinander durch das gemeinsame Führungsmittel an die Wechselposition der Arbeitsspindel bewegt werden.

Es erweist sich als vorteilhaft, wenn das erste Überführungsmittel und das zweite Überführungsmittel der Werkzeugwechseleinrichtung zumindest im Bereich der ersten Übergabeposition und der zweiten Übergabeposition parallel zueinander verlaufen oder dass das gemeinsame Überführungsmittel der Werkzeugwechseleinrichtung das Abstandsmittel umfasst, an dem das zweite Haltemittel angeordnet ist.

Durch beide Maßnahmen kann gewährleistet werden, dass die Arbeitsspindel stets an ein und dieselbe Wechselposition verfahren werden kann und dort sowohl ein erstes Werkzeug vom ersten Haltemittel aufnehmen oder ein erstes Werkzeug an das erste Haltemittel abgeben kann oder, wenn ein erstes Werkzeug bereits an der Arbeitsspindel angeordnet ist, an ein und derselben Wechselposition ein zweites Werkzeug aufnehmen oder ein zweites Werkzeug abgeben kann.

Erstes Haltemittel und/oder zweites Haltemittel lassen sich durch das Überführungsmittel einfach bewegen, wenn das gemeinsame Überführungsmittel der Werkzeugwechseleinrichtung eine gemeinsame Führungsschiene umfasst, in der der das erste Haltemittel mit einem ersten Schlittenabschnitt und in der das Abstandsmittel mit einem Abstandsmittel-Schlittenabschnitt entlang einer quer oder schräg zur Spindelachse verlaufenden gemeinsamen Überführungsrichtung geführt bewegbar ist oder wenn das erste Überführungsmittel und das zweite Überführungsmittel der Werkzeugwechseleinrichtung jeweils eine Führungsschiene umfassen, in der der das erste Haltemittel mit einem ersten Schlittenabschnitt entlang einer quer oder schräg zur Spindelachse verlaufenden ersten Überführungsrichtung geführt bewegbar ist bzw. in der das zweite Haltemittel mit einem zweiten Schlittenabschnitt entlang einer quer oder schräg zur Spindelachse verlaufenden zweiten Überführungsrichtung geführt bewegbar ist.

Um ein erstes Werkzeug und/oder um ein zweites Werkzeug durch das erste Haltemittel, bzw. durch das zweite Haltemittel sicher festlegen zu können, erweist es sich als vorteilhaft, wenn das erste Haltemittel greiferartig ausgebildet ist und mindestens zwei erste Greifarme, durch die in einer Greifstellung mindestens ein erstes Werkzeug kraft- und/oder formschlüssig festlegbar ist, und mindestens ein erstes Lösemittel umfasst, durch das die ersten Greifarme in eine Freigabestellung überführbar sind, in der ein erstes Werkzeug vom ersten Haltemittel entnehmbar oder am ersten Haltemittel anordenbar ist, und/oder wenn das zweite Haltemittel greiferartig ausgebildet ist und mindestens zwei zweite Greifarme, durch die in einer Greifstellung mindestens ein zweites Werkzeug kraft- und/oder formschlüssig festlegbar ist, und mindestens ein zweites Lösemittel umfasst, durch das die zweiten Greifarme in eine Freigabestellung überführbar sind, in der ein zweites Werkzeug vom zweiten Haltemittel entnehmbar oder am zweiten Haltemittel anordenbar ist.

Um zu gewährleisten, dass das erste Werkzeug, bzw. das zweite Werkzeug stets sicher gehalten ist, erweist es sich als vorteilhaft, wenn das erste Haltemittel mindestens ein erstes Spannmittel umfasst, durch das die mindestens zwei ersten Greifarme in die Greifstellung vorgespannt sind und/oder wenn das zweite Haltemittel mindestens ein zweites Spannmittel umfasst, durch das die mindestens zwei zweiten Greifarme in die Greifstellung vorgespannt sind und/oder wenn das erste Lösemittel ein erstes Stempelelement, das am ersten Spannmittel anliegt, und/oder wenn das zweite Lösemittel ein zweites Stempelelement umfasst, das am zweiten Spannmittel anliegt, wobei das erste Lösemittel und/oder das zweite Lösemittel mechanisch, pneumatisch, hydraulisch oder elektrisch mit einer der Spannkraft des ersten Spannmittels. bzw. des zweiten Spannmittel entgegenwirkenden Lösekraft beaufschlagbar ist.

Dadurch, dass das erste Haltemittel mindestens ein erstes Spannmittel und dadurch, dass das zweite Haltemittel mindestens ein zweites Spannmittel umfasst, durch das die mindestens zwei ersten Greifarme, bzw. die mindestens zwei zweiten Greifarme in die Greifstellung vorgespannt sind, ist das jeweilige Werkzeug auch dann sichergehalten, wenn die Werkzeugmaschine stromlos, drucklos oder Dergleichen ist.

Dadurch, dass das erste Haltemittel ein erstes Lösemittel und das zweite Haltemittel ein zweites Lösemittel umfasst, die jeweils im ersten Spanmittel, bzw. im zweiten Spannmittel entgegenwirkbar sind, kann das erstes Haltemittel, bzw. das zweite Haltemittel aktiv zum Freigeben des ersten Werkzeugs, bzw. des zweiten Werkzeugs angesteuert werden.

Wenn das zweite Haltemittel über ein Abstandmittel zum Überführungsmittel beabstandet ist, erweist es sich insbesondere als vorteilhaft, wenn das zweite Lösemittel mindestens eine kanalartige Aussparung in Abstandsmittel umfasst, die insbesondere eine Führung für ein Medium, wie elektrisches Kabel oder Fluid, vom gemeinsamen Überführungsmittel an das zweite Lösemittel bildet.

Hierdurch können innerhalb der kanalartigen Aussparung im Abstandmittel das zum Betätigen des zweiten Lösemittels notwendige Medium, wie elektrisches Kabel oder Fluid, insbesondere Gas oder Flüssigkeit, an das zweite Haltemittel transportiert werden.

Eine Weiterbildung der Werkzeugmaschine umfasst mindestens ein Werkzeugmagazin, das der Werkzeugwechseleinrichtung zugeordnet ist oder das durch die Werkzeugwechseleinrichtung ausgebildet ist, und in dem mindestens ein erstes Werkzeug und mindestens ein zweites Werkzeug speicherbar ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkzeugmaschine.

In der Zeichnung zeigt:
- Figur 1: Eine perspektivische Draufsicht auf ein Ausführungsbeispiel der Werkzeugmaschine;
- Figur 2: Eine perspektivische Detailansicht der Werkzeugmaschine gemäß Figur 1 im Bereich der Wechselposition der Arbeitsspindel;
- Figur 3: Eine perspektivische Seitenansicht auf ein zweites Haltemittel mit Abstandmittel;
- Figur 4: Eine Schnittansicht durch ein erstes Haltemittel gemäß Figur 1.

Die Figuren zeigen Bereiche und Komponenten einer insgesamt mit dem Bezugszeichen 2 versehenen Werkzeugmaschine. Diese umfasst eine Arbeitsspindel 4, die entlang einer Spindelachse 6 erstreckt ist. An der Arbeitsspindel 4 sind zum Bearbeiten von Werkstücken entlang der Spindelachse 6 ein erstes Werkzeug 8 unmittelbar an der Arbeitsspindel 4 und ein zweites Werkzeug 10 unmittelbar an dem ersten Werkzeug 8 festlegbar.

Darüber hinaus umfasst die Werkzeugmaschine 2 eine Werkzeugwechseleinrichtung 12, die bei dem in den Figuren gezeigten Ausführungsbeispielen eine Vielzahl von ersten Haltemitteln 14 umfasst. An den ersten Haltemitteln 14 sind jeweils ein erstes Werkzeug 8 festlegbar.

Bei dem in den Figuren gezeigten Ausführungsbeispiel sind die ersten Haltemittel 14 durch ein gemeinsames Überführungsmittel 16 in eine Wechselposition der Arbeitsspindel 4 bewegbar, an der die Arbeitsspindel 4 zum automatischen Aufnehmen oder Abgeben eines ersten Werkzeugs 8 verfahrbar ist.

Darüber hinaus umfasst die in den Figuren dargestellte Werkzeugmaschine 2 mindestens ein zweites Haltemittel 18, an dem mindestens ein zweites Werkzeug 10 festlegbar ist. Durch das gemeinsame Überführungsmittel 16 ist das zweite Haltemittel 18 an die Wechselposition der Arbeitsspindel 4 verfahrbar und, wenn das zweite Haltemittel 18 an der Wechselposition der Arbeitsspindel 4 angeordnet ist, zum Aufnehmen oder Abgeben eines zweiten Werkzeugs 10 angeordnet. Hierdurch ist es ermöglicht, dass die Arbeitsspindel 4, an der bereits ein erstes Werkzeug 8 angeordnet ist, in ein und derselben Wechselposition ein zweites Werkzeug 10 vom zweiten Haltemittel 18 aufnehmen, bzw. an das zweite Haltemittel 18 wieder abgeben kann.

Die Figuren zeigen ein Ausführungsbeispiel der Werkzeugmaschine 2, bei der die Werkzeugwechseleinrichtung 12 das gemeinsame Überführungsmittel 16 umfasst. An diesen sind sowohl die Vielzahl von ersten Haltemitteln 14 angeordnet als auch das zweite Haltemittel 18. Hierzu umfasst das Überführungsmittel 16 eine gemeinsame Führungsschiene 20, an der die ersten Haltemittel 14 mit entsprechenden zur gemeinsamen Führungsschiene 20 korrespondierend, insbesondere komplementär, ausgebildeten Schlittenabschnitten führbar ist.

Durch die gemeinsame Führungsschiene 20 sind jeweils die einzelnen ersten Haltemittel 14 sowie das zweite Haltemittel 18 in der Wechselposition der Arbeitsspindel 4 durch Bewegen anordenbar. In der gemeinsamen Wechselposition der Arbeitsspindel 4 ist hierbei jeweils ein erstes Haltemittel 14 in einer ersten Übergabeposition angeordnet, in der ein durch die Arbeitsspindel 4 aufzunehmendes erstes Werkzeug 8, insbesondere mit einer quer oder schräg zur Spindelachse 6 verlaufenden Anlagefläche, berührend an der Arbeitsspindel 4 anliegt. Das zweite Haltemittel 18 kann durch das gemeinsame Überführungsmittel 16 in der Wechselposition der Arbeitsspindel 4 in einer zweiten Übergabeposition angeordnet sein, in der ein durch die Arbeitsspindel 4 aufzunehmendes zweites Werkzeug 10, insbesondere mit einer quer oder schräg zur Spindelachse 6 verlaufenden zweiten Anlagefläche, berührend auf einer der ersten Arbeitsspindel 4 abgewandten Seite des ersten Werkzeugs 8 an dem ersten Werkzeug 8 anliegt.

Die erste Übergabeposition der ersten Haltemittel 14 und die zweite Übergabeposition der zweiten Haltemittel 18 sind in Richtung parallel zur Spindelachse 6 um eine Länge des ersten Werkzeugs 8 in Richtung der Spindelachse 6 von der Arbeitsspindel 4 weg erstreckt versetzt angeordnet. Hierzu umfasst die Werkzeugwechseleinrichtung 12 der Werkzeugmaschine 2 ein Abstandsmittel 22, das mit einem Abstandsmittel-Schlittenabschnitt 24 in der gemeinsamen Führungsschiene 20 geführt gehalten ist und auf einer dem Abstandsmittel-Schlittenabschnitt 24 gegenüberliegenden Seite das zweite Haltemittel 18 angeordnet.

Um das gemeinsame Überführungsmittel 16 bewegen zu können, umfasst die Werkzeugwechseleinrichtung 12 einen gemeinsamen Antrieb 26, mit dem die ersten Haltemittel 14 und die zweiten Haltemittel 18 ketten- oder laufkatzenartig im Wesentlichen in einer Ebene schräg zur ersten Spindelachse 6 verfahrbar sind.

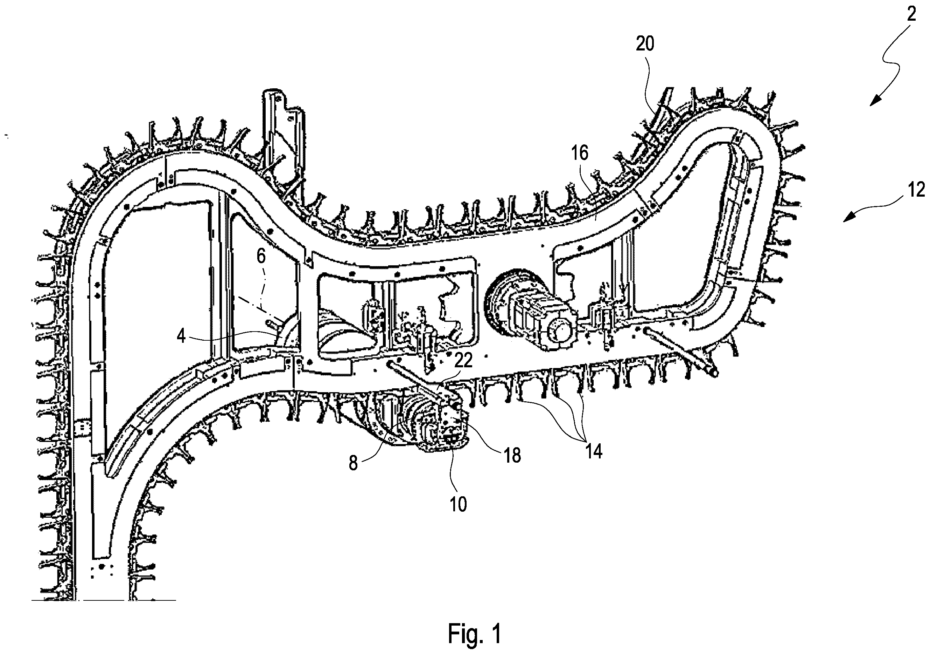

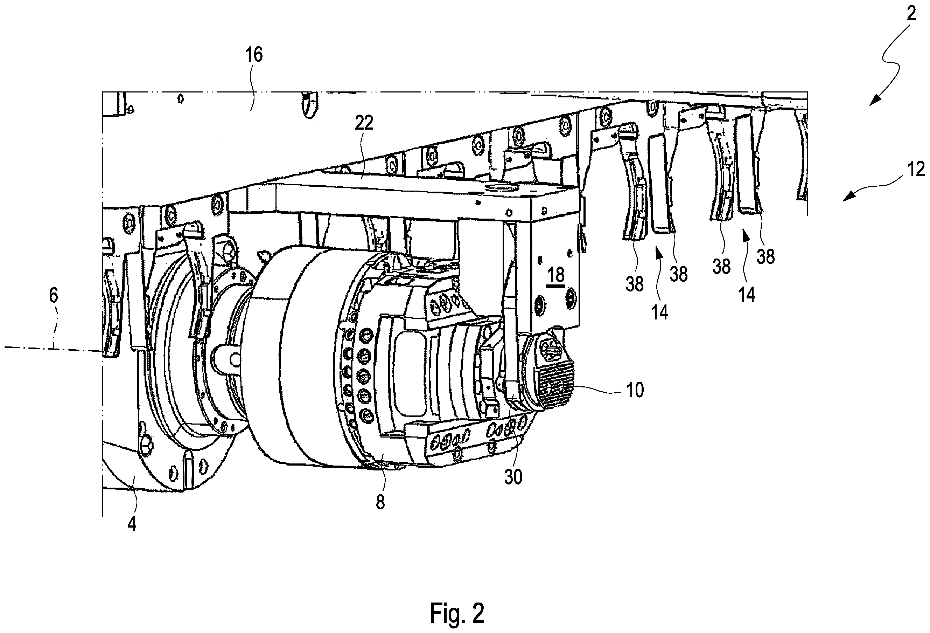

Die Figuren 1 und 2 zeigen, dass an einem an der Arbeitsspindel 4 angeordneten ersten Werkzeug 8 ein zweites Werkzeug 10 anordenbar und festlegbar ist. Zum Festlegen der ersten Werkzeuge 8 an der Arbeitsspindel 4 umfasst die Werkzeugmaschine 2 eine nicht näher dargestellte erste Festlegeeinheit, durch die ein automatisches Festlegen eines ersten Werkzeugs 8 an der Arbeitsspindel 4 ermöglicht ist.

In gleicher Weise umfasst die Werkzeugwechseleinrichtung 12 eine nicht näher dargestellte zweite Festlegeeinheit, mit der ein zweites Werkzeug 10 unmittelbar am ersten Werkzeug 8 automatisch festlegbar ist. Durch das unmittelbare Festlegen des zweiten Werkzeugs 10 am ersten Werkzeug 8, wird hierdurch das zweite Werkzeug 10 mittelbar an der Arbeitsspindel 4 festgelegt.

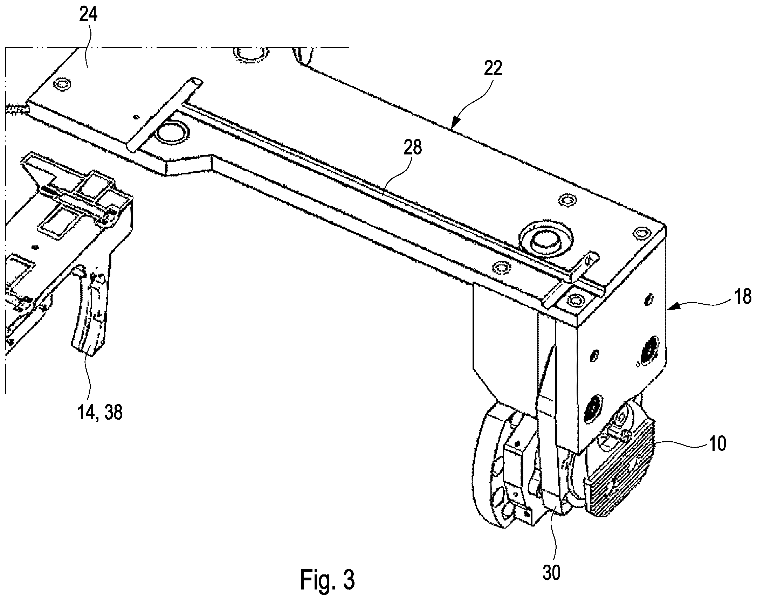

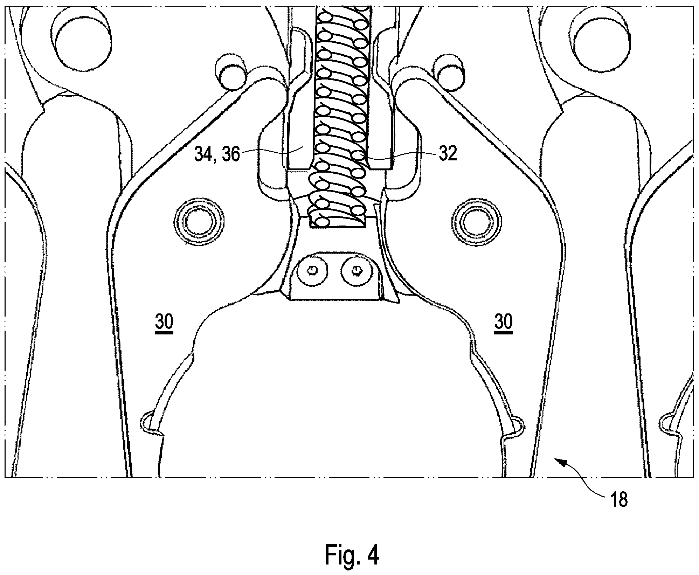

Die Figuren 3 und 4 zeigen Detailansichten eines zweiten Haltemittels 18. Aus Figur 3 ist ersichtlich, dass in dem Abstandsmittel 22 eine kanalartige Aussparung 28 angeordnet sein kann. Hierdurch ist es ermöglicht, ein Medium, wie elektrisches Kabel oder ein Fluid, vom gemeinsamen Überführungsmittel 16 in Richtung an das zweite Haltemittel 18 zu führen.

Aus Figur 2 ist ersichtlich, am Beispiel des zweiten Haltemittels 18, dass dieses greiferartig ausgebildet ist. Hierzu kann es zwei zweite Greifarme 30 umfassen, die durch ein zweites Spannmittel 32 in eine Greifstellung vorgespannt sind. In der Greifstellung können die beiden Greifarme 30 an einem zweiten Werkzeug 10 anliegen und dieses kraft- und/oder formschlüssig halten.

Zum Lösen der zwei zweiten Greifarme 30 aus der Greifstellung, umfasst das zweite Haltemittel 18 ein zweites Lösemittel 34, das stempelartig ausgebildet ist. Als solches zweites Stempelelement 26 ausgebildetes zweite Lösemittel 34 ist dieses dann betätigbar, beispielsweise mechanisch, pneumatisch, hydraulisch oder elektrisch und mit einer Lösekraft beaufschlagbar, die der Spannkraft der zweiten Spannmittel 32 entgegenwirkt und hierdurch die zwei zweiten Greifarme 30 in eine Freigabestellung überführt, in der ein zweites Werkzeug 10 vom zweiten Haltemittel 18 entnehmbar ist.

Vergleichbar sind die ersten Haltemittel 14 mit entsprechenden ersten Greifarmen 38 ausgestattet. Diese sind, wie bei den zweiten Haltemitteln 18, mit einer ähnlichen Kinematik versehen und umfassen hierzu erste Spannmittel und erste Lösemittel (in den Figuren nicht explizit dargestellt).

Insbesondere aus Figur 3 ist ersichtlich, dass es durch das Anordnen des zweiten Haltemittels 18 durch das Abstandsmittel 22 in der zweiten Übergabeposition ermöglicht ist, das zweite Werkzeug 10 vom ersten Werkzeug zu entnehmen oder am ersten Werkzeug 8 festzulegen, wobei die Arbeitsspindel 4 stets an ein und derselben Wechselposition anordenbar ist. Für das Festlegen eines ersten Werkzeugs 8 an der Arbeitsspindel 4 oder eines zweiten Werkzeugs 10 an der Arbeitsspindel 4, muss hierbei die Arbeitsspindel 4 stets jeweils an ein und dieselbe Wechselposition verfahren werden, ohne Rücksicht darauf, ob ein erstes Werkzeug 8 oder ein zweites Werkzeug 10 festgelegt wird.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Werkzeugmaschine
- 4: Arbeitsspindel
- 6: Spindelachse
- 8: erstes Werkzeug
- 10: zweites Werkzeug
- 12: Werkzeugwechseleinrichtung
- 14: erstes Haltemittel
- 16: gemeinsames Überführungsmittel
- 18: zweites Haltemittel
- 20: gemeinsame Führungsschiene
- 22: Abstandsmittel
- 24: Abstandsmittel-Schlittenabschnitt
- 26: gemeinsamer Antrieb
- 28: kanalartige Aussparung
- 30: zweiter Greifarm
- 32: zweites Spannmittel
- 34: zweites Lösemittel
- 36: zweites Stempelelement
- 38: erster Greifarm

## Patentansprüche

1. Werkzeugmaschine (2) mit mindestens einer Arbeitsspindel (4), die entlang einer Spindelachse (6) erstreckt ist und an der zum Bearbeiten von Werkstücken entlang der Spindelachse (6) ein erstes Werkzeug (8) unmittelbar an der Arbeitsspindel (4) und ein zweites Werkzeug (10) unmittelbar am ersten Werkzeug (8) festlegbar ist, und mit mindestens einer Werkzeugwechseleinrichtung (12), die mindestens ein erstes Haltemittel (14), an dem mindestens ein erstes Werkzeug (8) festlegbar ist und das an einer Wechselposition der Arbeitsspindel (4) anordenbar oder angeordnet ist, an die die Arbeitsspindel (4) zum automatischen Aufnehmen oder Abgeben eines ersten Werkzeugs (8) vom ersten Haltemittel (14), bzw. an das erste Haltemittel (14) verfahrbar ist, und die mindestens ein zweites Haltemittel (18) umfasst, an dem mindestens ein zweites Werkzeug (10) festlegbar ist und das an der Wechselposition der Arbeitsspindel (4) oder einer weiteren Wechselposition der Arbeitsspindel (4) anordenbar oder angeordnet ist, an die die Arbeitsspindel (4) mit an dieser festgelegtem ersten Werkzeug (8) zum automatischen Aufnehmen oder Abgeben eines zweiten Werkzeugs (10) vom zweiten Haltemittel, bzw. an das zweite Haltemittel (18) verfahrbar ist.

2. Werkzeugmaschine (2) nach Anspruch 1, **dadurch gekennzeichnet, dass** das erste Haltemittel (14) in der Wechselposition der Arbeitsspindel (4) in einer ersten Übergabeposition angeordnet ist, in der ein durch die Arbeitsspindel (4) aufzunehmendes erstes Werkzeug (8), insbesondere mit einer quer oder schräg zur Spindelachse (6) verlaufenden ersten Anlagefläche; berührend an der Arbeitsspindel (4) anliegt und/oder dass das zweite Haltemittel (18) in der Wechselposition der Arbeitsspindel (4) oder der weiteren Wechselposition in einer zweiten Übergabeposition angeordnet ist, in der ein durch die Arbeitsspindel (4) aufzunehmendes zweites Werkzeug (10), insbesondere mit einer quer oder schräg zur Spindelachse (6) verlaufenden zweiten Anlagefläche; berührend auf einer der Arbeitsspindel (4) abgewandten Seite des ersten Werkzeugs (8) an dem ersten Werkzeug (8) anliegt.

3. Werkzeugmaschine (2) nach Anspruch 1 oder 2, **gekennzeichnet durch** mindestens eine erste Festlegeeinheit, die eine erste Aufnahme in der Arbeitsspindel (4) oder im ersten Werkzeug (8), die mindestens ein erstes Vorsprungelement, das am ersten Werkzeug (8), bzw. an der Arbeitsspindel (4) festlegbar oder festgelegt ist und das in die erste Aufnahme parallel zur Spindelachse (6) einführbar ist, und die mindestens ein automatisches erstes Fügemittel umfasst, durch das das erste Vorsprungelement zumindest in der in der ersten Aufnahme eingeführten Anordnung in eine Hintergriffstellung überführbar ist, in der das erste Vorsprungelement in der ersten Aufnahme gegen ein Bewegen parallel zur Spindelsachse (6) festgelegt ist, und/oder durch mindestens eine zweite Festlegeeinheit, die eine zweite Aufnahme im ersten Werkzeug oder im zweiten Werkzeug (10), die mindestens ein zweites Vorsprungelement, das am zweiten Werkzeug (10), bzw. am ersten Werkzeug (8) festlegbar oder festgelegt ist und das in die zweite Aufnahme parallel zur Spindelachse (6) einführbar ist, und die mindestens ein automatisches zweites Fügemittel umfasst, durch das das zweite Vorsprungelement zumindest in der in der zweiten Aufnahme eingeführten Anordnung in eine Hintergriffstellung überführbar ist, in der das zweite Vorsprungelement in der zweiten Aufnahme gegen ein Bewegen parallel zur Spindelsachse (6) festgelegt ist.

4. Werkzeugmaschine (2) nach einem der Ansprüche 2 oder 3, **dadurch gekennzeichnet, dass** erste Haltemittel (14) und das zweite Haltemittel (18) der Werkzeugwechseleinrichtung (12) zumindest im Bereich der ersten Übergabeposition und der zweiten Übergabeposition in einer Ebene quer zur Spindelachse (6) parallel zueinander verlaufen und/oder dass die zweite Übergabeposition des zweiten Haltemittels (18) bezüglich der ersten Übergabeposition des ersten Haltemittels (14) in Richtung parallel zur Spindelachse (6) zumindest um die Länge des ersten Werkzeugs (8) in Richtung der Spindelachse (6) von der Arbeitsspindel (4) weg erstreckt versetzt angeordnet ist.

5. Werkzeugmaschine (2) nach einem der Ansprüche, **dadurch gekennzeichnet, dass** die die Werkzeugwechseleinrichtung (12) eine im Wesentlichen quer zur Spindelachse (6) verlaufende gemeinsame Tragstruktur, an der der das erste Haltemittel (14) unmittelbar festgelegt ist, und mindestens ein Abstandsmittel (22) umfasst, das an der Tragstruktur festgelegt ist, an dem das zweite Haltemittel (18) angeordnet ist und durch das das mindestens eine zweite Haltemittel (18) in Richtung parallel zur Spindelachse (6) zumindest um die Länge des ersten Werkzeugs (8) in Richtung der Spindelachse (6) zum ersten Haltemittel (14) beabstandet ist oder dass die die Werkzeugwechseleinrichtung (12) eine im Wesentlichen quer zur Spindelachse (6) verlaufende erste Tragstruktur, an der das erste Haltemittel (14) unmittelbar festgelegt ist und eine im Wesentlichen quer zur Spindelachse (6) verlaufende zweite Tragstruktur, an der das zweite Haltemittel (18) unmittelbar festgelegt ist, wobei erste Tragstruktur und zweite Tragstruktur zumindest im Bereich der ersten Übergabeposition und der zweiten Übergabeposition um die Länge des ersten Werkzeugs (8) in Richtung der Spindelachse (6) zueinander beabstandet sind.

6. Werkzeugmaschine (2) nach Anspruch 5, **dadurch gekennzeichnet, dass** jede Tragstruktur der Werkzeugwechseleinrichtung (12) mindestens ein Überführungsmittel (16) umfasst, wobei das erste Haltemittel (14) durch eines des mindestens einen Überführungsmittels (16) an die mindestens eine Wechselposition der Arbeitsspindel (4) bewegbar ist, und wobei das zweite Haltemittel (18) durch das Überführungsmittel (16) oder durch ein weiteres Überführungsmittel (16) an die Wechselposition der Arbeitsspindel (4) oder eine weitere Wechselposition der Arbeitsspindel (4) bewegbar ist.

7. Werkzeugmaschine (2) nach Anspruch 6, **dadurch gekennzeichnet, dass** mindestens eines des mindestens einen ersten Haltemittels (14) und/oder mindestens eines des mindestens einen zweiten Haltemittels (18) entkoppelt und unabhängig voneinander durch das mindestens eine Überführungsmittel (16) in die mindestens eine Wechselposition der Arbeitsspindel (4) bewegbar sind und/oder dass mindestens eines des mindestens einen ersten Haltemittels (14) und/oder mindestens eines des mindestens einen zweiten Haltemittels (18) miteinander gekoppelt und abhängig voneinander durch das mindestens eine Überführungsmittel (16) in die mindestens eine Wechselposition der Arbeitsspindel (4) bewegbar sind.

8. Werkzeugmaschine (2) nach einem der Ansprüche 5 bis 7, **dadurch gekennzeichnet, dass** die erste Tragstruktur der Werkzeugwechseleinrichtung (12) mindestens ein erstes Überführungsmittel umfasst, an dem mindestens eines des mindestens einen ersten Haltemittels (14) ortsfest festgelegt ist und dass die Werkzeugwechseleinrichtung (12) mindestens einen ersten Antrieb umfasst, durch den das erste Überführungsmittel bewegbar und das mindestens eine erste Haltemittels (14) an die Wechselposition der Arbeitsspindel (4), insbesondere der ersten Übergabeposition, bewegbar ist und dass die zweite Tragstruktur der Werkzeugwechseleinrichtung (12) mindestens ein zweites Überführungsmittel umfasst, an dem mindestens eines des mindestens einen zweiten Haltemittels (18) ortsfest festgelegt ist und dass die Werkzeugwechseleinrichtung (12) mindestens einen zweiten Antrieb umfasst, durch den das zweite Überführungsmittel bewegbar und das mindestens eine zweite Haltemittel (18) an die Wechselposition der Arbeitsspindel (4), insbesondere der zweiten Übergabeposition, bewegbar ist.

9. Werkzeugmaschine (2) nach einem der Ansprüche 5 bis 7, **dadurch gekennzeichnet, dass** die gemeinsame Tragstruktur der Werkzeugwechseleinrichtung (12) mindestens ein gemeinsames Überführungsmittel (16) umfasst, an dem mindestens eines des mindestens einen ersten Haltemittels (14) ortsfest festgelegt ist und an dem mindestens eines des mindestens einen zweiten Haltemittels (18) ortsfest festgelegt ist und dass die Werkzeugwechseleinrichtung (12) mindestens einen gemeinsamen Antrieb (26) umfasst, durch den das gemeinsame Überführungsmittel (16) bewegbar und das mindestens eine erste Haltemittels (14), insbesondere an die erste Übergabeposition, und das mindestens eine zweite Haltemittel (18), insbesondere an die zweite Übergabeposition, an die mindestens eine Wechselposition der Arbeitsspindel (4) bewegbar sind.

10. Werkzeugmaschine (2) nach Anspruch 8 oder 9, **dadurch gekennzeichnet, dass** das erste Überführungsmittel und das zweite Überführungsmittel der Werkzeugwechseleinrichtung (12) zumindest im Bereich der ersten Übergabeposition und der zweiten Übergabeposition parallel zueinander verlaufen oder dass das gemeinsame Überführungsmittel (16) der Werkzeugwechseleinrichtung (12) das Abstandsmittel (22) umfasst, an dem das zweite Haltemittel (18) angeordnet ist.

11. Werkzeugmaschine (2) nach einem der Ansprüche 8 bis 10, **dadurch gekennzeichnet, dass** das gemeinsame Überführungsmittel der Werkzeugwechseleinrichtung (12) eine gemeinsame Führungsschiene (20) umfasst, in der das erste Haltemittel (14) mit einem ersten Schlittenabschnitt und in der das Abstandsmittel (22) mit einem Abstandsmittel-Schlittenabschnitt (24) entlang einer quer oder schräg zur Spindelachse (6) verlaufenden gemeinsamen Überführungsrichtung geführt bewegbar ist oder dass das erste Überführungsmittel und das zweite Überführungsmittel der Werkzeugwechseleinrichtung (12) jeweils eine Führungsschiene (20) umfassen, in der das erste Haltemittel (14) mit einem ersten Schlittenabschnitt entlang einer quer oder schräg zur Spindelachse (6) verlaufenden ersten Überführungsrichtung geführt bewegbar ist, bzw. in der das zweite Haltemittel (18) mit einem zweiten Schlittenabschnitt entlang einer quer oder schräg zur Spindelachse (6) verlaufenden zweiten Überführungsrichtung geführt bewegbar ist.

12. Werkzeugmaschine (2) nach ein der vorhergehenden Ansprüche, **dadurch gekennzeichnet, dass** das erste Haltemittel (14) greiferartig ausgebildet ist und mindestens zwei erste Greifarme (38), durch die in einer Greifstellung mindestens ein erstes Werkzeug (8) kraft- und/oder formschlüssig festlegbar ist, und mindestens ein erstes Lösemittel umfasst, durch das die ersten Greifarme (38) in eine Freigabestellung überführbar sind, in der ein erstes Werkzeug (8) vom ersten Haltemittel (14) entnehmbar oder am ersten Haltemittel (14) anordenbar ist, und/oder dass das zweite Haltemittel (18) greiferartig ausgebildet ist und mindestens zwei zweite Greifarme (30), durch die in einer Greifstellung mindestens ein zweites Werkzeug (10) kraft- und/oder formschlüssig festlegbar ist, und mindestens ein zweites Lösemittel (34) umfasst, durch das die zweiten Greifarme (30) in eine Freigabestellung überführbar sind, in der ein zweites Werkzeug (10) vom zweiten Haltemittel (18) entnehmbar oder am zweiten Haltemittel (18) anordenbar ist.

13. Werkzeugmaschine (2) nach Anspruch 12, **dadurch gekennzeichnet, dass** das erste Haltemittel (14) mindestens ein erstes Spannmittel umfasst, durch das die mindestens zwei ersten Greifarme (38) in die Greifstellung vorgespannt sind und/oder dass das zweite Haltemittel (18) mindestens ein zweites Spannmittel (32) umfasst, durch das die mindestens zwei zweiten Greifarme (30) in die Greifstellung vorgespannt sind und/oder dass das erste Lösemittel ein erstes Stempelelement, das am ersten Spannmittel anliegt, und/oder dass das zweite Lösemittel (34) ein zweites Stempelelement (36) umfasst, das am zweiten Spannmittel (32) anliegt, wobei das erste Lösemittel und/oder das zweite Lösemittel (34) mechanisch, pneumatisch, hydraulisch oder elektrisch mit einer der Spannkraft des ersten Spannmittels, bzw. des zweiten Spannmittel (32) entgegenwirkenden Lösekraft beaufschlagbar ist.

14. Werkzeugmaschine (2) nach Anspruch 13, **dadurch gekennzeichnet, dass** das zweite Lösemittel (34) mindestens eine kanalartige Aussparung (28) in Abstandsmittel (22) umfasst, die insbesondere eine Führung für ein Medium, wie elektrisches Kabel, Mechanikeinheit, (Schieber, HebelKinematik) oder Fluid, vom gemeinsamen Überführungsmittel (16) an das zweite Lösemittel (34) bildet.

15. Werkzeugmaschine (2) nach ein der vorhergehenden Ansprüche,
**gekennzeichnet durch** mindestens ein Werkzeugmagazin, das der Werkzeugwechseleinrichtung (12) zugeordnet ist oder das durch die Werkzeugwechseleinrichtung (12) ausgebildet ist, und in dem mindestens ein erstes Werkzeug (8) und mindestens ein zweites Werkzeug (10) speicherbar ist.
